(19) Europäisches Patentamt
European Patent Office
Office européen des brevets

(11) **EP 2 928 746 B1**

(12) **FASCICULE DE BREVET EUROPEEN**

(45) Date de publication et mention de la délivrance du brevet:
**22.02.2017 Bulletin 2017/08**

(21) Numéro de dépôt: **13808158.3**

(22) Date de dépôt: **03.12.2013**

(51) Int Cl.:
*B60W 20/00* [(2016.01)]   *B60W 10/02* [(2006.01)]
*B60W 10/06* [(2006.01)]   *B60W 10/08* [(2006.01)]
*B60K 6/52* [(2007.10)]

(86) Numéro de dépôt international:
**PCT/FR2013/052931**

(87) Numéro de publication internationale:
**WO 2014/087095 (12.06.2014 Gazette 2014/24)**

(54) **PROCEDE DE CONTROLE DE COUPLES LORS DU DEMARRAGE DU MOTEUR THERMIQUE D'UN VEHICULE HYBRIDE, POUR PASSER D'UN MODE ELECTRIQUE A UN MODE HYBRIDE**

VERFAHREN ZUR STEUERUNG VON DREHMOMENTEN BEI DER INBETRIEBNAHME DES VERBRENNUNGSMOTORS EINES HYBRIDFAHRZEUGS ZUR UMSCHALTUNG VON EINEM ELEKTRISCHEN MODUS ZU EINEM HYBRIDMODUS

METHOD FOR CONTROLLING TORQUES WHEN STARTING THE COMBUSTION ENGINE OF A HYBRID VEHICLE TO SWITCH FROM AN ELECTRIC MODE TO A HYBRID MODE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.12.2012 FR 1261739**

(43) Date de publication de la demande:
**14.10.2015 Bulletin 2015/42**

(73) Titulaire: **Peugeot Citroën Automobiles SA 78140 Vélizy Villacoublay (FR)**

(72) Inventeurs:
• **LE NEINDRE, Yvan**
  **F-75017 Paris (FR)**
• **ROCQ, Gaetan**
  **F-78125 La Boissiere Ecole (FR)**

(56) Documents cités:
DE-A1-102008 053 505   DE-A1-102010 006 305
FR-A1- 2 887 496   US-A1- 2009 093 336
US-A1- 2009 233 766

**Description**

La présente invention concerne un procédé de contrôle de couples, pour un véhicule hybride comportant un moteur thermique entraînant par un embrayage et une boîte de vitesses un premier train roulant (voir par exemple US-A-2009/093336), et une machine électrique de traction entraînant l'autre train roulant, lors d'un démarrage de ce moteur pour le passage d'un mode de roulage électrique à un mode hybride, ainsi qu'un calculateur de contrôle et un véhicule hybride mettant en oeuvre un tel procédé.

Certains véhicules hybrides, appelés hybrides parallèles, disposent d'un moteur thermique entraînant par un embrayage un arbre primaire d'une boîte de vitesses comportant une machine électrique de traction, qui peut être liée à cet arbre par un deuxième moyen de couplage.

Un procédé connu de contrôle de l'embrayage de ce type de véhicule, présenté notamment par le document FR-A1-2887496, réalise lors du démarrage du moteur thermique pour un passage d'un mode de roulage électrique au mode hybride, afin d'éviter un choc sur l'arbre primaire, un ajustement du couple délivré sur cet arbre par les motorisations, en fonction de la variation des inerties liées à cet arbre, dépendant de l'état de l'embrayage.

Toutefois pour des véhicules hybrides comportant un moteur thermique qui motorise un premier train roulant par une boîte de vitesses comportant un embrayage en entrée, et une machine électrique de traction qui motorise l'autre train, par exemple si le moteur thermique entraîne le train avant du véhicule et la machine électrique le train arrière, il est nécessaire de prévoir des adaptations de ce procédé prenant en compte l'inertie de la machine électrique qui se trouve à l'extérieur de la boîte de vitesses.

La présente invention a notamment pour but d'éviter pour ce type de véhicule hybride, lors du démarrage du moteur thermique permettant de passer d'un mode de roulage électrique à un mode hybride comprenant les deux motorisations, des chocs pendant la fermeture de l'embrayage.

Elle propose à cet effet un procédé de contrôle de couples d'un véhicule hybride, pour le démarrage d'un moteur thermique permettant de passer d'un mode électrique à un mode hybride, comprenant la fermeture d'un embrayage de couplage reliant ce moteur à l'arbre primaire d'une boîte de vitesses entraînant les roues d'un premier train roulant, ce véhicule comportant une machine électrique qui entraîne les roues du deuxième train roulant, caractérisé en ce que pour accoupler le moteur thermique préalablement démarré et piloté par une régulation en vitesse qui est un peu supérieure à celle de l'arbre primaire, il applique à un moment avant la fermeture complète de l'embrayage, une augmentation instantanée de la consigne de couple sur cet embrayage formant une discontinuité afin d'obtenir sa fermeture complète, pour passer ensuite à une régulation du moteur en couple, cet écart de consigne étant calculé de manière à compenser les variations d'inertie ramenée à cet arbre, en prenant en compte l'inertie de la machine électrique et du véhicule ramenées à l'arbre primaire, ainsi que le couple de cette machine et le couple résistant du véhicule.

Un avantage du procédé de contrôle de couples selon l'invention, est que pour les démarrages du moteur thermique lors d'un roulage du véhicule en mode électrique, on peut calculer de manière précise le saut lors de la fermeture complète de l'embrayage, pour compenser avec l'augmentation de la consigne de couple sur l'embrayage, la différence d'inertie ramenée à l'arbre primaire, et ainsi éviter un choc dû à des discontinuités entraînant des oscillations de l'accélération du véhicule. On obtient aussi un meilleur temps de réponse pour l'accélération du véhicule.

Le procédé de contrôle de couples selon l'invention peut en outre comporter une ou plusieurs des caractéristiques suivantes, qui peuvent être combinées entre elles.

En particulier, le procédé de contrôle de couples peut calculer l'écart de consigne de couple correspondant à l'écart entre la consigne finale de couple sur l'arbre primaire et la consigne initiale, avec la formule suivante :

$$C_{ap2} - C_{ap1} = \frac{\frac{J_{mth}}{\eta^2}}{J_{veh} + \frac{J_{mel}}{\rho^2}} \times \left( C_{ap1} + \frac{\eta * C_{mel}}{\rho} - \eta\, C_{res} \right) ;$$

la valeur « $\eta*C_{mel}/\rho$ » représentant l'inertie de la machine électrique arrière, pouvant être négligée dans ce calcul en fonction de son dimensionnement par rapport aux autres inerties.

Avantageusement, à partir d'une demande d'augmentation de la consigne de couple théorique sur l'arbre primaire, au temps du début de la prise de couple par l'embrayage, le procédé applique une consigne d'augmentation réelle linéaire jusqu'au moment de la fermeture de l'embrayage, afin d'assurer une continuité de l'accélération à la roue.

Avantageusement, pendant la phase de prise de couple par l'embrayage, la machine électrique compense le couple apporté par l'embrayage en retirant cette valeur au couple total demandé, afin d'obtenir un couple total qui respecte le couple roue de consigne.

L'invention a aussi pour objet un calculateur de contrôle pour une chaîne de traction de véhicule hybride, comprenant un embrayage qui relie un moteur thermique à l'arbre primaire d'une boîte de vitesses entraînant des roues d'un premier train roulant, ce véhicule disposant d'une machine électrique qui entraîne les roues du deuxième train roulant, le calculateur comportant des moyens mettant en oeuvre un procédé de contrôle de couples, pour le démarrage de ce moteur permettant de passer d'un mode électrique à un mode hybride, comprenant l'une quelconque des caractéristiques précédentes.

L'invention a de plus pour objet un véhicule hybride comportant une chaîne de traction, comprenant un embrayage qui relie un moteur thermique à l'arbre primaire d'une boîte de vitesses entraînant les roues avant, ce véhicule disposant d'une machine électrique qui entraîne les roues arrière, le véhicule comportant des moyens mettant en oeuvre un procédé de contrôle de couples pour le démarrage de ce moteur permettant de passer d'un mode électrique à un mode hybride, comprenant l'une quelconque des caractéristiques précédentes.

L'invention sera mieux comprise et d'autres caractéristiques et avantages apparaîtront plus clairement à la lecture de la description ci-après, donnée à titre d'exemple et de manière non limitative en référence aux dessins annexés dans lesquels :

- la figure 1 est un schéma d'un véhicule hybride mettant en oeuvre un procédé de contrôle de couple selon l'invention ;
- la figure 2 est un schéma simplifié des chaînes de traction de ce véhicule ;
- la figure 3 est un graphique présentant pour ce procédé en fonction du temps, des augmentations de la consigne de couple du moteur thermique suivant un procédé connu, et suivant le procédé selon l'invention ; et
- la figure 4 est un graphique présentant en fonction du temps pour le procédé suivant l'invention, différentes courbes de couple.

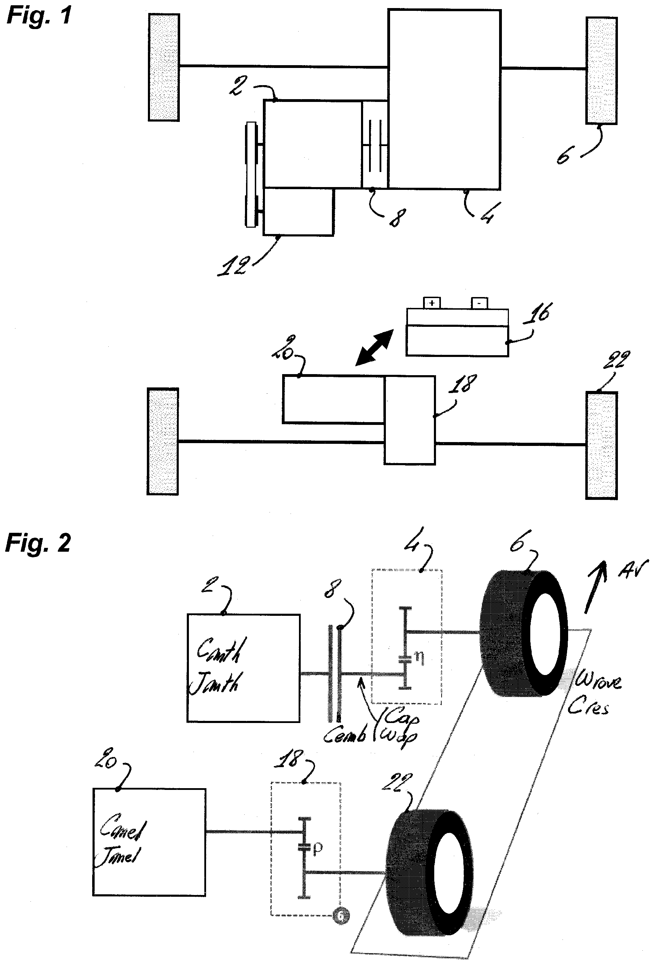

La figure 1 présente un véhicule hybride comportant un moteur thermique 2 lié par un embrayage 8 à l'arbre primaire d'une boîte de vitesses 4 comprenant une commande automatique de l'embrayage et des passages de vitesses, qui entraîne les roues avant 6 de ce véhicule.

Une machine électrique avant 12 est couplée en permanence au moteur thermique 2, afin de l'assister dans son fonctionnement.

Une machine électrique arrière 20 alimentée par une batterie 16, est couplée aux roues arrière 22 du véhicule par une transmission 18.

Un système de supervision de la chaîne de traction coordonne le fonctionnement des deux motorisations 2, 20, de la boîte de vitesses 4 en choisissant son rapport, et de l'embrayage 8 pour décider du mode de roulage répartissant la puissance à obtenir en fonction des demandes du conducteur, afin d'obtenir une optimisation des points de fonctionnement qui permet de réduire la consommation d'énergie, les émissions de gaz polluants et l'agrément de conduite.

Le véhicule hybride peut ainsi fonctionner avec des modes de roulage comprenant notamment un mode électrique utilisant la machine électrique arrière 20, le moteur thermique 2 étant arrêté et la boîte de vitesses 4 étant au point mort, un mode hybride utilisant les deux motorisations, un mode quatre roues motrices avec les deux motorisations, appelé aussi mode « E-AWD », permettant d'améliorer la motricité et la tenue de route du véhicule, ainsi qu'un mode sport.

La figure 2 présente de manière simplifiée, certaines grandeurs physiques nécessaires pour le fonctionnement du procédé de contrôle de couple lors de la fermeture complète de l'embrayage 8 correspondant à la fin du glissement, afin d'éviter des chocs dans la boîte de vitesses, et de maintenir une continuité de l'accélération du véhicule pour assurer le confort des passagers. La flèche marquée « AV » indique le sens de marche du véhicule vers l'avant.

Le procédé de contrôle de couples utilise les valeurs suivantes :

- aveh : Accélération véhicule (m/s$^2$)
- Cemb : Couple embrayage (N.m)
- Cmel : Couple machine électrique (N.m)
- Cmth : Couple moteur thermique (N.m)
- Cres : Couple résistif à la roue (N.m)
- Cap : Couple arbre primaire (N.m)
- Jmel : Inertie machine électrique (kg.m$^2$)
- Jmth : Inertie moteur thermique (kg.m$^2$)
- Jveh : Inertie véhicule (kg.m$^2$)
- $\eta$ : Démultiplication de la boîte de vitesses
- $\rho$ : Démultiplication de la transmission de la machine électrique
- $\omega$ap : Régime arbre primaire (rad/s)
- $\omega$roue : Régime roue (rad/s)

Considérons le bilan des couples avant et après la fermeture de l'embrayage lors du démarrage du moteur thermique pendant le roulage du véhicule. Avant la fermeture de l'embrayage, on a :

$$a_{veh} = R \frac{d\omega_{roue}}{dt} = R \frac{\frac{C_{mel}}{\rho} + \frac{C_{emb}}{\eta} - C_{res}}{J_{veh} + \frac{J_{mel}}{\rho^2}}$$

Après la fermeture de l'embrayage, on a :

$$a_{veh} = R \frac{d\omega_{roue}}{dt} = R \frac{\frac{C_{mel}}{\rho} + \frac{C_{mth}}{\eta} - C_{res}}{J_{veh} + \frac{J_{mel}}{\rho^2} + \frac{J_{mth}}{\eta^2}}$$

L'objectif du procédé de contrôle du couple est de garantir à la fermeture de l'embrayage une continuité de l'accélération du véhicule aveh, et donc des deux égalités précédentes.

$$\frac{\frac{C_{mel}}{\rho} + \frac{C_{mth}}{\eta} - C_{res}}{J_{veh} + \frac{J_{mel}}{\rho^2} + \frac{J_{mth}}{\eta^2}} = \frac{\frac{C_{mel}}{\rho} + \frac{C_{emb}}{\eta} - C_{res}}{J_{veh} + \frac{J_{mel}}{\rho^2}}$$

On en déduit en prenant Cap1 et Cap2 les consignes de couple sur l'arbre primaire de la boîte de vitesses 4, respectivement juste avant et juste après la fermeture :

$$\frac{C_{mth}}{\eta} = \frac{C_{ap2}}{\eta} = \left( J_{veh} + \frac{J_{mel}}{\rho^2} + \frac{J_{mth}}{\eta^2} \right) \frac{\frac{C_{mel}}{\rho} + \frac{C_{emb}}{\eta} - C_{res}}{J_{veh} + \frac{J_{mel}}{\rho^2}} + C_{res} - \frac{C_{mel}}{\rho}$$

$$= \frac{\left( J_{veh} + \frac{J_{mel}}{\rho^2} + \frac{J_{mth}}{\eta^2} \right)}{J_{veh} + \frac{J_{mel}}{\rho^2}} * \frac{C_{ap1}}{\eta} + \frac{\frac{J_{mth}}{\eta^2}}{J_{veh} + \frac{J_{mel}}{\rho^2}} * \left( \frac{C_{mel}}{\rho} - C_{res} \right)$$

On déduit de cette dernière égalité ∆Cap_cns correspondant à l'écart entre la consigne finale Cap2 et la consigne initiale Cap1, pendant l'augmentation formant une discontinuité, avec la formule:

$$C_{ap2} - C_{ap1} = \frac{\frac{J_{mth}}{\eta^2}}{J_{veh} + \frac{J_{mel}}{\rho^2}} * \left( C_{ap1} + \frac{\eta * C_{mel}}{\rho} - \eta C_{res} \right) \quad (1)$$

On voit donc qu'il est nécessaire non seulement de tenir compte de l'ajout d'une inertie moteur Jmth pour établir une absence de choc lors de l'accostage, mais également d'additionner le couple appliqué par la machine arrière aux efforts résistifs appliqués aux roues, afin de garantir une continuité d'accélération du véhicule dans cette phase.

On notera que dans le cadre d'une industrialisation du logiciel intégrant le procédé de contrôle, et dans le but d'optimiser la charge et l'espace mémoire du calculateur mettant en oeuvre ce procédé, on pourra simplifier le calcul en négligeant le terme concernant l'inertie de la machine électrique arrière 20 en fonction de son dimensionnement.

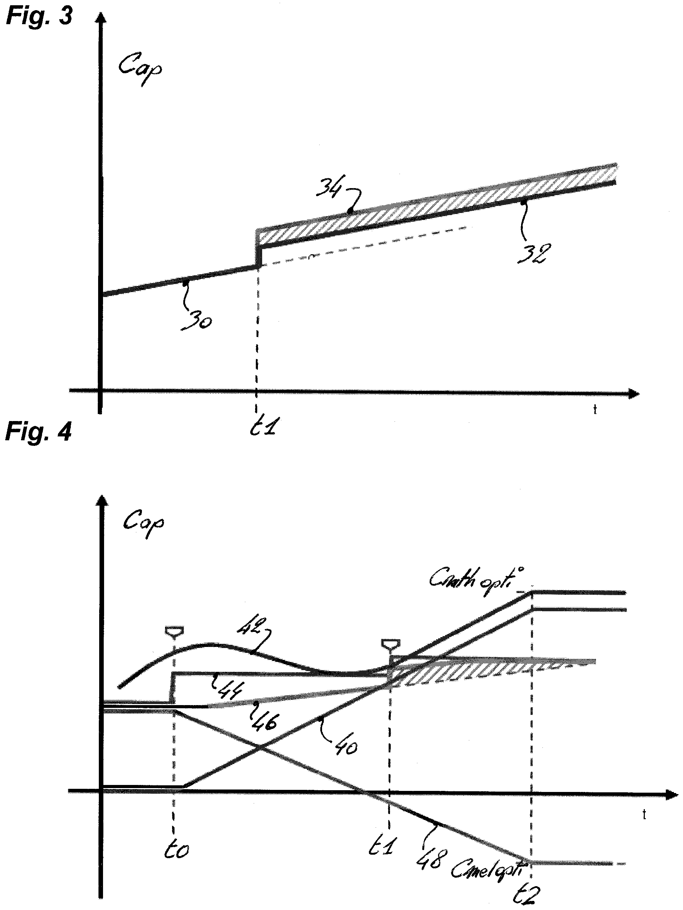

La figure 3 présente en fonction du temps t, la consigne de couple sur l'arbre primaire Cap, avant et après la fermeture complète de l'embrayage qui a lieu au temps t1. Avant le temps t1, la droite 30 est la consigne de couple sur l'arbre primaire Cap1, qui est croissante.

A la fermeture complète de l'embrayage au temps t1, pour un véhicule hybride comportant une machine électrique liée à l'arbre primaire de la boîte de vitesses, un procédé connu de contrôle du couple du moteur thermique, applique une petite augmentation formant une discontinuité de la consigne de couple, pour donner la droite du milieu 32. On constate que la machine électrique constituant une inertie importante directement liée à l'arbre primaire de la boîte de vitesses, cette augmentation brutale de la consigne de couple destinée à compenser l'inertie supplémentaire du moteur thermique sur l'arbre primaire, peut être faible.

Pour un véhicule hybride comprenant la machine électrique entraînant le train arrière, le procédé selon l'invention applique une forte augmentation de la consigne de couple pour donner la droite supérieure 34. La machine électrique ajoutant peu d'inertie rapportée à l'arbre primaire de la boîte de vitesses, cette augmentation brutale de la consigne de couple destinée à compenser l'inertie supplémentaire du moteur thermique est plus importante.

La figure 4 présente en fonction du temps t, un exemple de démarrage du moteur thermique qui va être couplé par l'embrayage initialement ouvert, aux roues avant du véhicule, afin par exemple de répondre à une demande de couple supplémentaire venant du conducteur.

Au temps t0 on a un accostage de l'embrayage qui commence à transmettre un couple tout en glissant, jusqu'au temps t1 où l'embrayage se ferme complètement avec un arrêt du glissement.

On atteint au temps t2 correspondant à la fin du démarrage du moteur thermique, les valeurs de couple optimal du moteur thermique Cmth opti et de la machine électrique Cmel opti.

La courbe 40 représente une consigne théorique de couple sur l'embrayage, formant une rampe dont la pente constante est calculée pour la durée du démarrage du moteur thermique comprise entre le temps t0, et le temps t2 où le moteur thermique prend son couple optimal Cmth opti. Au temps t1 le procédé réalise une augmentation brutale de la consigne de couple de l'embrayage, qui permet de coller très rapidement cet embrayage en arrêtant son glissement.

La courbe 42 représente le couple de consigne demandé au moteur thermique Cmth, qui a démarré avant le moment t0, et comporte une vitesse de rotation un peu supérieure à celle de l'arbre primaire de la boîte de vitesses pendant toute la phase de glissement de l'embrayage.

Le démarrage du moteur thermique peut être fait indifféremment par tous les moyens disponibles, notamment par un démarreur conventionnel, par la machine électrique 12 liée à ce moteur, ou par l'inertie du véhicule en passant par la boîte de vitesses 4 et l'embrayage 8 qui est fermé, puis ouvert après ce démarrage.

La courbe 44 représente la consigne de couple théorique ramené à l'arbre primaire Cap, qui comporte une première augmentation brutale au temps t0, afin de répondre à une augmentation de la demande de couple présentée par le conducteur pour accélérer le véhicule, et au temps t1 une deuxième augmentation brutale aussi, liée à l'augmentation de la consigne de couple de l'embrayage.

La courbe 46 représente la courbe réelle de couple ramené à l'arbre primaire Cap. On notera que l'augmentation brutale au temps t0 de la consigne de couple théorique ramené à l'arbre primaire 44, est traduite par le procédé par une augmentation linéaire jusqu'au temps t1, visible sur la courbe réelle de couple 46, afin d'assurer une continuité de cette courbe qui lisse l'accélération à la roue et évite des chocs et des oscillations.

La courbe 48 représente la consigne de couple demandée à la machine électrique arrière 20, ramené à travers successivement la démultiplication η de la transmission arrière 18 et celle pde la boîte de vitesses avant 4, à l'arbre primaire de la boîte de vitesses 4 de manière à garder des valeurs équivalentes.

Pendant le glissement de l'embrayage entre les temps t0 et t1, le moteur thermique est piloté en vitesse suivant une consigne assurant un accostage tangentiel à la vitesse de l'arbre primaire, de manière à respecter la continuité du couple de ce moteur Cmth, lors du passage d'une régulation par la vitesse à une régulation par le couple.

Au temps t1 lors de la fermeture complète de l'embrayage, la discontinuité du couple de consigne ramené à l'arbre primaire 44 calculée par le procédé, correspondant à l'écart entre la consigne avant accostage Cap1 et celle après accostage Cap2, prend en compte l'inertie supplémentaire ajoutée sur cet arbre par le moteur thermique, pour permettre de conserver une accélération constante de l'arbre primaire, et donc du véhicule.

L'écart de consigne ΔCap_cns est calculé avec la formule (1) présentée ci-dessus, qui donne ainsi le respect du profil de couple Cap à l'accostage. On notera qu'il est nécessaire de générer cet échelon de manière instantanée, sous peine de provoquer des à-coups.

Après l'accostage au temps t1, le moteur thermique est piloté en couple et suit une rampe de pente identique à celle de l'embrayage, pour converger vers son couple optimal Cmth opti.

Pendant la phase de prise de couple par l'embrayage commençant au temps t0, la machine électrique arrière 20 compense le couple apporté par l'embrayage Cemb, en retirant cette valeur au couple total demandé pour calculer le couple qu'elle doit délivrer Cmel, afin d'obtenir un couple total qui respecte le couple roue de consigne.

On notera qu'au temps t1, le couple de la machine électrique Cmel devient négatif, cette machine 20 travaillant en génératrice de courant pour recharger les batteries 16. Après ce temps t1, les couples délivrés par le moteur thermique Cmth et la machine électrique Cmel continuent à converger vers leurs valeurs de consigne de couple optimal.

On peut réaliser ainsi de manière économique avec seulement des compléments de logiciels, en utilisant les équipements existants dans le véhicule hybride, une amélioration du confort en supprimant les à-coups lors des phases de démarrage du moteur thermique pendant un roulage en mode électrique. On notera que lors de certains roulages de véhicules hybrides on peut compter plus de 200 démarrages du moteur thermique pendant une heure, il est donc particulièrement important de réaliser des transitions garantissant un bon niveau de confort.

Avantageusement, le procédé est mis en oeuvre de manière économique par un calculateur existant, qui peut en particulier être le calculateur de contrôle du moteur thermique.

**Revendications**

1. Procédé de contrôle de couples d'un véhicule hybride, pour le démarrage d'un moteur thermique (2) permettant de passer d'un mode électrique à un mode hybride, comprenant la fermeture d'un embrayage de couplage (8) reliant ce moteur à l'arbre primaire d'une boîte de vitesses (4) entraînant les roues d'un premier train roulant (6), ce véhicule comportant une machine électrique (20) qui entraîne les roues du deuxième train roulant (22), **caractérisé en ce que** pour accoupler le moteur thermique (2) préalablement démarré et piloté par une régulation en vitesse qui est supérieure à celle de l'arbre primaire, il applique à un moment (t1) avant la fermeture complète de l'embrayage, une augmentation instantanée de la consigne de couple sur cet embrayage (8) formant une discontinuité afin d'obtenir sa fermeture complète, pour passer ensuite à une régulation du moteur en couple, cet écart de consigne étant calculé de manière à compenser les variations d'inertie ramenée à cet arbre, en prenant en compte l'inertie de la machine électrique (20) et du véhicule ramenées à l'arbre primaire, ainsi que le couple de cette machine et le couple résistant du véhicule.

2. Procédé de contrôle de couples selon la revendication 1, **caractérisé en ce qu'**il calcule l'écart de consigne de couple correspondant à l'écart entre la consigne finale de couple sur l'arbre primaire (Cap2) et la consigne initiale (Cap1), avec la formule suivante :

$$C_{ap2} - C_{ap1} = \frac{\frac{J_{mth}}{\eta^2}}{J_{veh} + \frac{J_{mel}}{\rho^2}} \ast \left( C_{ap1} + \frac{\eta \ast C_{mel}}{\rho} - \eta\, C_{res} \right) \, ;$$

en prenant les valeurs suivantes :

- Cmel : Couple machine électrique (20)
- Cmth : Couple moteur thermique (2)
- Cres : Couple résistif à la roue
- Jmel : Inertie machine électrique
- Jmth : Inertie moteur thermique
- Jveh : Inertie véhicule
- $\eta$ : Démultiplication de la boîte de vitesses (4)
- $\rho$ : Démultiplication de la transmission aux roues (18) de la machine électrique ;

la valeur « $\eta$*Cmel/$\rho$ » représentant l'inertie de la machine électrique arrière, pouvant être négligée dans ce calcul en fonction de son dimensionnement par rapport aux autres inerties.

3. Procédé de contrôle de couples selon la revendication 1 ou 2, **caractérisé en ce qu'**à partir d'une demande d'augmentation de la consigne de couple théorique sur l'arbre primaire (44), au temps (t0) du début de la prise de couple par l'embrayage, il applique une consigne d'augmentation réelle linéaire jusqu'au moment (t1) de la fermeture de l'embrayage, afin d'assurer une continuité de l'accélération à la roue.

4. Procédé de contrôle de couples selon l'une quelconque des revendications précédentes, **caractérisé en ce que** pendant la phase de prise de couple par l'embrayage (8), la machine électrique (20) compense le couple apporté par l'embrayage (Cemb) en retirant cette valeur au couple total demandé, afin d'obtenir un couple total qui respecte le couple roue de consigne.

5. Calculateur de contrôle pour une chaîne de traction de véhicule hybride, comprenant un embrayage (8) qui relie un moteur thermique (2) à l'arbre primaire d'une boîte de vitesses (4) entraînant des roues d'un premier train roulant (6), ce véhicule disposant d'une machine électrique (20) qui entraîne les roues du deuxième train roulant (22), **caractérisé en ce qu'**il comporte des moyens mettant en oeuvre un procédé de contrôle de couples pour le démarrage du moteur thermique (2) permettant de passer d'un mode électrique à un mode hybride, qui est réalisé selon l'une quelconque des revendications précédentes.

6. Véhicule hybride comportant une chaîne de traction, comprenant un embrayage (8) qui relie un moteur thermique (2) à l'arbre primaire d'une boîte de vitesses (4) entraînant les roues avant (6), ce véhicule disposant d'une machine électrique (20) qui entraîne les roues arrière (22), **caractérisé en ce qu'**il comporte des moyens mettant en oeuvre un procédé de contrôle de couples pour le démarrage moteur thermique (2) permettant de passer d'un mode électrique à un mode hybride, qui est réalisé selon l'une quelconque des revendications 1 à 4.

**Patentansprüche**

1. Verfahren zur Steuerung von Drehmomenten eines Hybridfahrzeugs für das Starten eines Verbrennungsmotors (2), das es erlaubt, von einem elektrischen Modus zu einem Hybridmodus überzugehen, das das Schließen einer Kopplungskupplung (8) umfasst, die diesen Motor mit der Hauptwelle eines Schaltgetriebes (4) verbindet, das die Räder einer ersten Fahrachse (6) antreibt, wobei dieses Fahrzeug eine Elektromaschine (20) umfasst, die die Räder der zweiten Fahrachse (22) antreibt, **dadurch gekennzeichnet, dass** es zum Kuppeln des Verbrennungsmotors (2), der zuvor gestartet wurde und durch eine Drehzahlregelung gesteuert wird, die höher ist als die der Hauptwelle, ein Drehmoment (t1) vor dem kompletten Schließen der Kupplung anlegt, wobei eine sofortige Erhöhung des Drehmomentsollwerts auf dieser Kupplung (8) eine Diskontinuität bildet, um ihr komplettes Schließen zu erhalten, um anschließend auf eine Drehmomentregelung des Motors überzugehen, wobei dieser Sollwertunterschied derart berechnet ist, dass die Trägheitsvariationen in Bezug auf diese Welle kompensiert werden, indem die Trägheit der Elektromaschine (20) und des Fahrzeugs bezogen auf die Hauptwelle sowie das Drehmoment dieser Maschine und das Gegenmoment des Fahrzeugs berücksichtigt werden.

2. Verfahren zur Steuerung von Drehmomenten nach Anspruch 1, **dadurch gekennzeichnet, dass** es den Drehmomentsollwertunterschied, der dem Unterschied zwischen dem abschließenden Drehmomentsollwert auf der Hauptwelle (Cap2) und dem ursprünglichen Sollwerts (Cap1) entspricht, mit der folgenden Formel berechnet:

$$C_{ap2} - C_{ap1} = \frac{\frac{J_{mth}}{\eta^2}}{J_{veh} + \frac{J_{msi}}{\rho^2}} * \left( C_{ap1} + \frac{\eta * C_{mel}}{\rho} - \eta\, C_{res} \right)$$

wobei die folgenden Werte genommen werden:

- Cmel: Drehmoment der Elektromaschine (20)
- Cmth: Drehmoment des Verbrennungsmotors (2)
- Cres: Gegenmoment an dem Rad
- Jmel: Trägheit der Elektromaschine
- Jmth: Trägheit des Verbrennungsmotors
- Jveh: Trägheit des Fahrzeugs
- η: Untersetzung des Schaltgetriebes (4)
- ρ: Untersetzung des Getriebes an die Räder (18) der Elektromaschine,

wobei der Wert "η*Cmel/ρ" die Trägheit der hinteren Elektromaschine darstellt, die bei dieser Berechnung in Abhängigkeit von ihrer Bemessung in Bezug zu den anderen Trägheiten vernachlässigt werden kann.

3. Verfahren zur Steuerung von Drehmomenten nach Anspruch 1 oder 2, **dadurch gekennzeichnet, dass** es ausgehend von einer Erhöhungsanfrage des theoretischen Drehmomentsollwerts auf der Hauptwelle (44) im Zeitpunkt (t0) des Beginns der Momentübernahme durch die Kupplung einen linearen realen Erhöhungssollwert bis zu dem Zeitpunkt (t1) des Schließens der Kupplung anlegt, um eine Kontinuität der Beschleunigung an dem Rad sicherzustellen.

4. Verfahren zur Steuerung von Drehmomenten nach einem der vorhergehenden Ansprüche, **dadurch gekennzeichnet, dass** die Elektromaschine (20) während der Phase der Momentübernahme durch die Kupplung (8) das von der Kupplung beigesteuerte Moment (Cemb) kompensiert, indem dieser Wert von dem verlangten Gesamtmoment abgezogen wird, um ein Gesamtmoment zu erhalten, das das Radsollwertmoment einhält.

5. Rechner zum Steuern für einen Antriebsstrang eines Hybridfahrzeugs, das eine Kupplung (8) umfasst, die einen Verbrennungsmotor (2) mit der Hauptwelle eines Schaltgetriebes (4), das Räder einer ersten Fahrachse (6) antreibt, verbindet, wobei dieses Fahrzeug über eine Elektromaschine (20) verfügt, die die Räder der zweiten Fahrerachse (22) antreibt, **dadurch gekennzeichnet, dass** er Mittel umfasst, die ein Verfahren zur Steuerung von Drehmomenten für das Starten des Verbrennungsmotors (2) umsetzen, die es erlauben, von einem elektrischen Modus zu einem Hybridmodus überzugehen, das nach einem der vorhergehenden Ansprüche ausgeführt ist.

6. Hybridfahrzeug, das einen Antriebsstrang umfasst, der eine Kupplung (8) umfasst, die einen Verbrennungsmotor (2) mit der Hauptwelle eines Schaltgetriebes (4), das die Vorderräder (6) antreibt, verbindet, wobei dieses Fahrzeug über eine Elektromaschine (20) verfügt, die die hinteren Räder (22) antreibt, **dadurch gekennzeichnet, dass** es Mittel umfasst, die ein Verfahren zur Steuerung von Drehmomenten für das Starten des Verbrennungsmotors (2) umsetzen, das es erlaubt, von einem elektrischen Modus auf einen Hybridmodus überzugehen, das nach einem der Ansprüche 1 bis 4 ausgeführt ist.

**Claims**

1. A method for controlling torques of a hybrid vehicle, for starting a combustion engine (2) permitting passage from an electric mode to a hybrid mode, including the closing of a coupling clutch (8) connecting this engine to the primary shaft of a gearbox (4) driving the wheels of a first wheelset (6), this vehicle comprising an electric machine (20) which drives the wheels of the second wheelset (22), **characterized in that** to couple the combustion engine (2) previously started and controlled by a speed regulation which is greater than that of the primary shaft, it applies at an instant (t1) before the complete closure of the clutch, an instantaneous increase of the torque setpoint on this clutch (8) forming a discontinuity so as to obtain its complete closure, to then pass to a regulation of the engine in terms of torque, this offset setpoint being calculated so as to compensate for the variations in inertia applied to this shaft, taking into account the inertia of the electric machine (20) and of the vehicle applied to the primary shaft, and also the torque of this machine and the resistant torque of the vehicle.

2. The method for controlling torques according to claim 1, **characterized in that** it calculates the torque setpoint offset corresponding to the offset between the final torque setpoint on the primary shaft (Cap2) and the initial setpoint (Cap1), with the following formula:

$$C_{ap2} - C_{ap1} = \frac{\frac{J_{mth}}{\eta^2}}{J_{veh} + \frac{J_{mel}}{\rho^2}} \times \left( C_{ap1} + \frac{\eta * C_{mel}}{\rho} - \eta\, C_{res} \right);$$

taking the following values:

- Cmel: electric machine torque (20)
- Cmth: combustion engine torque (2)
- Cres: resistive torque at the wheel
- Jmel: electric machine inertia
- Jmth: combustion engine inertia
- Jveh: vehicle inertia
- $\eta$: reduction ratio of the gearbox (4)
- $\rho$: reduction ratio of the transmission to the wheels (18) of the electric machine;

the value "$\eta * Cmel/\rho$" representing the inertia of the rear electric machine, being able to be disregarded in this calculation as a function of its dimensioning with respect to the other inertias.

3. The method for controlling torques according to claim 1 or 2, **characterized in that** from a request for increase of the theoretical torque setpoint on the primary shaft (44), at the time (t0) of the start of the synchromesh by the clutch, it applies a linear actual increase setpoint up to the instant (t1) of the closure of the clutch, so as to ensure a continuity of the acceleration to the wheel.

4. The method for controlling torques according to any one of the preceding claims, **characterized in that** during the syncromesh phase by the clutch (8), the electric machine (20) compensates for the torque brought by the clutch (Cemb) by taking this value from the total requested torque, so as to obtain a total torque which respects the setpoint wheel torque.

5. A control computer for a powertrain of a hybrid vehicle, including a clutch (8) which connects a combustion engine (2) to the primary shaft of a gearbox (4) driving wheels of a first wheelset (6), this vehicle have an electric machine (20) which drives the wheels of the second wheelset (22), **characterized in that** it comprises means implementing a method for controlling torques for starting the combustion engine (2) permitting passage from an electric mode to a hybrid mode, which is realized according to any one of the preceding claims.

6. A hybrid vehicle comprising a powertrain, including a clutch (8) which connects a combustion engine (2) to the primary shaft of a gearbox (4) driving the front wheels (6), this vehicle having an electric machine (20) which drives the rear wheels (22), **characterized in that** it comprises means implementing a method for controlling torques for starting a combustion engine (2) permitting passage from an electric mode to a hybrid mode, which is realized according to any one of claims 1 to 4.

**Fig. 1**

**Fig. 2**

**Fig. 3**

**Fig. 4**

**EP 2 928 746 B1**

**RÉFÉRENCES CITÉES DANS LA DESCRIPTION**

**Documents brevets cités dans la description**

- US 2009093336 A
- FR 2887496 A1